# EUROPÄISCHE PATENTANMELDUNG

(11) **EP 1 002 842 A1**
(43) Veröffentlichungstag der Anmeldung: **24.05.2000**
(21) Anmeldenummer: 99121218.4
(22) Anmeldetag: 23.10.1999
(51) Int. Cl.: C09D 167/06

(54) **Beschichtungsstoff, insbesondere für poröse oder penetrationsfähige Oberflächen**

(30) Priorität: 18.11.1998 DE 19853145
(71) Anmelder: Ostermann & Scheiwe GmbH & Co, 48155 Münster (DE)
(72) Erfinder: Hermann, Siegbert, 48351 Everswinkel (DE); Dederichs, Silke, 48153 Münster (DE); Schobben, Christian, 48165 Münster (DE)
(74) Vertreter: Schulze Horn & Partner

(57) **Zusammenfassung**

Die Erfindung betrifft einen Beschichtungsstoff, insbesondere für poröse oder penetrationsfähige Oberflächen, der eine flüssige oder pastöse Ausgangskonsistenz aufweist, in der er auf die Oberfläche auftragbar ist, und der ein strahlenhärtbares Bindemittel enthält, das durch Bestrahlung, vorzugsweise mit Photonen oder Elektronen, und dadurch bewirkte Polymerisation in den von der Bestrahlung getroffenen Bereichen schnell aushärtbar ist.

Der erfindungsgemäße Beschichtungsstoff ist dadurch gekennzeichnet, daß das Bindemittel unter Beibehaltung seiner Strahlenhärtbarkeit durch einem Sauerstoffangriff zugängliche chemische Gruppen oder Funktionalitäten für eine zusätzliche oxidative Trockenbarkeit modifiziert ist und daß der Beschichtungsstoff wenigstens einen Katalysator für die oxidative Trocknung enthält.

## Beschreibung

Die vorliegende Erfindung betrifft einen Beschichtungsstoff, insbesondere für poröse oder penetrationsfähige Oberflächen, der eine flüssige oder pastöse Ausgangskonsistenz aufweist, in der er auf die Oberfläche auftragbar ist, und der ein strahlenhärtbares Bindemittel enthält, das durch Bestrahlung, vorzugsweise mit Photonen oder Elektronen, und dadurch bewirkte Polymerisation in den von der Bestrahlung getroffenen Bereichen schnell aushärtbar ist.

Beschichtungsstoffe mit strahlenhärtbarem Bindemittel sind aus der Praxis auf dem einschlägigen Markt allgemein bekannt. Derartige Beschichtungsstoffe bieten insbesondere den Vorteil, daß sie nach dem Auftragen auf die zu beschichtende Oberfläche durch Bestrahlung, z.B. mit Photonen oder Elektronen, schnell, d.h. innerhalb von Sekunden, ausgehärtet werden können. Deshalb werden derartige Beschichtungsstoffe insbesondere in der Möbel industrie mit ihrer hohen Automatisierung und Geschwindigkeit bei der Fertigung eingesetzt.

Bei der Beschichtung von dichten, geschlossenen Oberflächen mit relativ geringen Beschichtungsdicken sind die bekannten Beschichtungsstoffe mit strahlenhärtbarem Bindemittel unproblematisch, da die gesamte Beschichtung in sehr kurzer Zeit gehärtet wird. Probleme ergeben sich bei derartigen Beschichtungsstoffen aber, wenn poröse oder penetrationsfähige Oberflächen beschichtet werden sollen oder wenn eine relativ große Schichtdicke der Beschichtung gewünscht wird. In diesen Fällen wirkt sich die physikalisch zwangsläufig geringe Reichweite der Photonen- oder Elektronenstrahlung nachteilig aus; in Bereichen, in die die zur Härtung benötigte Strahlung nicht gelangt, erfolgt auch keine Härtung des Bindemittels bzw. des Beschichtungsstoffs. Der Beschichtungsstoff wird dann durch die Bestrahlung zwar oberflächlich gehärtet, jedoch verbleiben unter diesem gehärteten Oberflächenbereich der Beschichtung nicht zu vernachlässigende Anteile des Beschichtungsstoffs, die nicht ausgehärtet sind. Diese nicht ausgehärteten Anteile des Beschichtungsstoffs enthalten chemische Verbindungen, die in der Lage sind, durch das beschichtete Material hindurchzudiffundieren und so in die Umwelt zu gelangen, wo sie schädlich auf Lebewesen, insbesondere Menschen, einwirken können, da die austretenden Verbindungen häufig als zumindest reizend oder sogar gesundheitsschädlich einzustufen sind.

Zur Behebung des vorstehend dargelegten Mangels ist schon früher ein Beschichtungsstoff vorgeschlagen worden, der ebenfalls ein strahlenhärtbares Bindemittel enthält und dem unmittelbar vor seiner Verarbeitung zusätzlich reaktive Verbindungen zugegeben werden. Durch die Zugabe dieser reaktiven Verbindungen wird neben der Strahlenhärtung zusätzlich eine Härtung durch die reaktiven chemischen Verbindungen hervorgerufen. Die oberflächliche Härtung des Beschichtungsstoffs erfolgt dabei mittels Strahlenhärtung und die Aushärtung der durch die Strahlen nicht ausgehärteten, tieferen Anteile des Beschichtungsstoffs erfolgt durch die reaktiven chemischen Verbindungen, so daß eine durchgehende Aushärtung des Beschichtungsstoffs erreicht wird.

Dieser zuletzt beschriebene Beschichtungsstoff hat aber einen wesentlichen Nachteil, der die Verarbeitbarkeit erheblich einschränkt. Durch die Zugabe der reaktiven Verbindungen entsteht ein Zweikomponenten-Beschichtungsstoff, der insbesondere nur eine relativ kurze Verarbeitungszeitspanne aufweist. Dies beruht darauf, daß sofort nach Zugabe der zur zusätzlichen Aushärtung benötigten reaktiven Verbindungen die hierdurch bewirkte Aushärtung beginnt, so daß maximal eine Verarbeitungszeitspanne von einigen Stunden erreichbar ist. Nach Ablauf dieser Zeitspanne kann ein derartiger Beschichtungsstoff nicht mehr genutzt werden und auch eine Aufarbeitung ist nicht mehr möglich. Hinzu kommen als Nachteile der erhöhte Herstellungs- und Lageraufwand und die Erfordernis einer dosierten Zugabe und intensiven Vermischung der zwei Komponenten des Beschichtungsstoffs unmittelbar vor dessen Auftragen auf die zu beschichtende Oberfläche.

Für die vorliegende Erfindung stellt sich deshalb die Aufgabe, einen Beschichtungsstoff der eingangs genannten Art zu schaffen, der die aufgeführten Nachteile vermeidet und bei dem sowohl eine schnelle oberflächliche Härtung als auch eine nachfolgende vollständige Tiefen-Härtung oder -Trocknung gewährleistet ist und der als Einkomponenten-Beschichtungsstoff herstellbar und verarbeitbar ist.

Die Lösung der Aufgabe gelingt mit einem Beschichtungsstoff der eingangs genannten Art, der dadurch gekennzeichnet ist, daß das Bindemittel unter Beibehaltung seiner Strahlenhärtbarkeit durch einem Sauerstoffangriff zugängliche chemische Gruppen oder Funktionalitäten für eine zusätzliche oxidative Trockenbarkeit modifiziert ist und daß der Beschichtungsstoff wenigstens einen Katalysator für die oxidative Trocknung enthält.

Vorteilhaft verbindet der erfindungsgemäße Beschichtungsstoff die Strahlenhärtung mit einer oxidativen Härtung oder Trocknung. Rein oxidativ trocknende Beschichtungsstoffe, z.B. Ölfarben, sind zwar seit sehr langer Zeit bekannt, wurden jedoch auch schon seit längerem von der einschlägigen Fachwelt insbesondere wegen der relativ langen Trocknungszeiten nicht mehr als zeitgemäß und wirtschaftlich anwendbar angesehen. Entgegen diesem Vorurteil der Fachwelt kombiniert der erfindungsgemäße Beschichtungsstoff die sehr moderne Strahlenhärtung mit der sehr alten oxidativen Trocknung oder Härtung. Die Strahlenhärtung sorgt für eine schnelle Härtung des Beschichtungsstoffs in allen Bereichen, die von der die Härtung auslösenden Strahlung erreicht werden. In den tieferen Bereichen, die nicht durch die Strahlung ausgehärtet werden können, wird die Trocknung oder Härtung durch die oxidative Trocknung bewirkt, wobei hierfür problemlos eine etwas längere Zeit vergehen darf. Mit dem erfindungsgemäßen Beschichtungsstoff ist deshalb eine wirtschaftliche Produktion ohne aufwendige Trocknungsvorrichtungen und ohne lange Totzeiten durch Trocknungszeiten möglich, wobei gleichzeitig eine vollständige Härtung des Beschichtungsstoffs auch in tieferen Bereichen gewährleistet ist. Dadurch ist ein Ausdiffundieren von flüchtigen, möglicherweise schädlichen Verbindungen aus den beschichteten Werkstücken ausgeschlossen. Ein wesentlicher Vorteil für die Hersteller und Anwender des Beschichtungsstoffs gemäß Erfindung besteht darin, daß dieser als Einkomponenten-Beschichtungsstoff herstellbar und verarbeitbar ist. Dabei weist der Beschichtungsstoff eine sehr hohe Lagerstabilität sowie eine praktisch nicht begrenzte Verarbeitungszeitspanne auf. Ein Dosieren und Vermischen von zwei oder mehr Komponenten durch den Anwender ist hier nicht erforderlich. Der erfindungsgemäße Beschichtungsstoff erfüllt damit sowohl alle wirtschaftlichen und technischen Anforderungen des Anwenders, z.B. eines Möbelherstellers, als auch alle Anforderungen des Umweltschutzes, insbesondere im Hinblick auf die Menschen, die die beschichteten Gegenstände, z.B Möbel, später benutzen.

In weiterer Ausgestaltung der Erfindung ist das strahlenhärtbare Bindemittel bevorzugt mit einfach und/oder mehrfach ungesättigten aliphatischen und/oder aromatischen Carbonsäuren modifiziert. Diese Art und Weise der Modifizierung des Bindemittels ist sowohl im Hinblick auf die Rohstoff- und Verarbeitungskosten besonders wirtschaftlich als auch im Hinblick auf den Umweltschutz unbedenklich, so daß die gestellten Anforderungen hiermit besonders gut erfüllt werden.

In weiterer Konkretisierung sind bevorzugt als Carbonsäuren Fettsäuren und/oder Öle eingesetzt, deren chemische und physikalische Eigenschaften dem Fachmann vertraut sind und die relativ problemlos handhabbar und einsetzbar sind.

Als Katalysator sind bevorzugt Carbonsäuresalze eingesetzt, da diese einerseits die gewünschte oxidative Trocknung oder Härtung wirksam fördern und andererseits die Eigenschaften des Beschichtungsstoffs hinsichtlich seiner Verarbeitbarkeit und hinsichtlich seiner Auswirkungen auf die Umwelt nicht negativ beeinflussen.

Konkret sind die Carbonsäuresalze bevorzugt Salze des Cobalt und/oder Lithium, da derartige Carbonsäuresalze marktgängig und kostengünstig sind.

Bevorzugt ist vorgesehen, daß das Bindemittel durch UV-Strahlung härtbar ist und dafür einen auf UV-Strahlung reagierenden Photoinitiator enthält, der nach Anregung durch UV-Strahlung in mit dem übrigen Bindemittel reagierende reaktive Verbindungen zerfällt. Viele Anwender von Beschichtungsstoffen der eingangs genannten Art sind mit der UV-Härtung vertraut und setzen dafür ausgelegte Beschichtungsanlagen ein. Vorteilhaft kann der erfindungsgemäße Beschichtungsstoff damit auch auf schon vorhandenen Beschichtungsanlagen eingesetzt werden, wobei die Anwender des Beschichtungsstoffs sich in technischer Hinsicht praktisch nicht umstellen müssen. Deshalb ist es möglich, den erfindungsgemäßen Beschichtungsstoff bei den Anwendern ohne zusätzliche Anlagen-Investitionen einzusetzen, was wirtschaftlich besonders vorteilhaft ist.

Zur Erzielung einer ausreichenden oxidativen Trocknung oder Härtung des Beschichtungsstoffs in den tieferen, durch die Bestrahlung nicht gehärteten Bereichen genügt es, daß der Beschichtungsstoff den Katalysator in einem Gehalt zwischen 0,01 und 5,0 Gew.-%, vorzugsweise zwischen 0,1 und 1,0 Gew.-%, enthält. Damit schlägt der Katalysator mengenmäßig und somit auch kostenmäßig bei dem Beschichtungsstoff gemäß Erfindung nur sehr gering zu Buche, was besonders für eine wirtschaftliche Herstellung des Beschichtungsstoffs günstig ist. Dabei kann der Beschichtungsstoff in seiner einfachsten Form allein aus dem Bindemittel und dem Katalysator bestehen, wobei dann ein farblos-transparenter Beschichtungsstoff vorliegt.

Wie von gängigen Beschichtungsstoffen an sich bekannt, kann auch der erfindungsgemäße Beschichtungsstoff zusätzlich Feststoffe, insbesondere Füllstoffe und/oder Pigmente, in einem Gehalt bis zu 50 Gew.-% enthalten. Füllstoffe sorgen beispielsweise für eine erhöhte Abriebfestigkeit des Beschichtungsstoffs in seinem ausgehärteten Zustand, was insbesondere für Fußboden- oder Treppenbeschichtungen wichtig ist. Pigmente werden für farbige Beschichtungsstoffe eingesetzt, wobei hier das gängige Pigment- und Farbenspektrum verwendbar ist.

Bevorzugt wird der erfindungsgemäße Beschichtungsstoff als sogenanntes "100 % - System" eingesetzt, d.h. ohne zugesetzte flüchtige Komponente. Eine gewünschte Viskosität des Beschichtungsstoffs läßt sich beispielsweise vorab durch Auswahl der Viskosität des Bindemittels einstellen. Bei Bedarf, insbesondere bei nachträglich erforderlich gewordener Änderung der Viskosität zu niedrigeren Werten, kann aber auch der Beschichtungsstoff gemäß Erfindung eine flüchtige Komponente, insbesondere Wasser oder Lösemittel, in einem Gehalt bis zu 90 Gew.-% enthalten. Mit der flüchtigen Komponente werden im wesentlichen nur die Verarbeitungseigenschaften, speziell die Fließfähigkeit des Beschichtungsstoffs, beeinflußt, ohne daß die sonstigen Funktionen und Eigenschaften des Beschichtungsstoffs beeinträchtigt werden.

Die Viskosität des Beschichtungsstoffs, die durch das Bindemittel und/oder durch die flüchtige Komponente beeinflußt und festgelegt werden kann, richtet sich insbesondere nach der vorgesehenen Art des Auftrages des Beschichtungsstoffs auf die damit zu beschichtenden Oberflächen. Dabei kann der erfindungsgemäße Beschichtungsstoff mit den unterschiedlichen bekannten Auftragsverfahren auf die zu beschichtenden Oberflächen aufgetragen werden, beispielsweise durch Aufwalzen, Aufstreichen, Aufgießen oder Aufspritzen, so daß der Beschichtungsstoff in dieser Hinsicht keinerlei Einschränkungen unterworfen ist.

Schließlich kann der erfindungsgemäße Beschichtungsstoff neben dem Katalysator weitere Additive, insbesondere zur Beeinflussung der Verarbeitungs- und/oder Endprodukt-Eigenschaften, in einem Gehalt bis zu 10 Gew.-% enthalten. Durch die weiteren Additive können, wie an sich bekannt, z.B. die Verarbeitungseigenschaften des Beschichtungsstoffs beeinflußt werden oder gewünschte Eigenschaften, z.B. wasserabweisende Oberflächeneigenschaften, des das Endprodukt darstellenden ausgehärteten Beschichtungsstoffs erzeugt werden.

Im folgenden wird ein Beispiel für einen erfindungsgemäßen Beschichtungsstoff angegeben. Der Beschichtungsstoff enthält folgende Bestandteile:

| | |
|---|---|
| fettsäuremodifiziertes acryliertes Polyesterharz | 96,8 Gew.-% |
| Phenyl-2-hydroxy-2-propyl-keton | 3,0 Gew.-% |
| Cobaltoctoat 12% | 0,2 Gew.-% |

Zur Herstellung des Beschichtungsstoffs werden die aufgeführten Bestandteile intensiv miteinander vermischt. Dadurch wird ein Beschichtungsstoff in einer flüssigen Konsistenz mit einer Viskosität, die von der gewählten Viskosität des Polyesterharzes abhängt, erzeugt.

Dieser Beschichtungsstoff ist nach seinem Auftrag auf eine zu beschichtende Oberfläche durch UV-Bestrahlung schnell aushärtbar, wobei seine durch die UV-Strahlung nicht erreichten, tiefer liegenden Anteile mit geringerer, aber für die Anwender ausreichend großer Geschwindigkeit oxidativ trocknen bzw. härten. Die gehärtete Beschichtung ist farblos-transparent. Selbst bei fehlender UV-Bestrahlung härtet die Beschichtung vollständig aus, nur mit längerer Härte- bzw. Trocknungszeit.

## Patentansprüche

1. Beschichtungsstoff, insbesondere für poröse oder penetrationsfähige Oberflächen, der eine flüssige oder pastöse Ausgangskonsistenz aufweist, in der er auf die Oberfläche auftragbar ist, und der ein strahlenhärtbares Bindemittel enthält, das durch Bestrahlung, vorzugsweise mit Photonen oder Elektronen, und dadurch bewirkte Polymerisation in den von der Bestrahlung getroffenen Bereichen schnell aushärtbar ist,
**dadurch gekennzeichnet,** daß das Bindemittel unter Beibehaltung seiner Strahlenhärtbarkeit durch einem Sauerstoffangriff zugängliche chemische Gruppen oder Funktionalitäten für eine zusätzliche oxidative Trockenbarkeit modifiziert ist und daß der Beschichtungsstoff wenigstens einen Katalysator für die oxidative Trocknung enthält.

2. Beschichtungsstoff nach Anspruch 1, dadurch gekennzeichnet, daß das strahlenhärtbare Bindemittel mit einfach und/oder mehrfach ungesättigten aliphatischen und/oder aromatischen Carbonsäuren modifiziert ist.

3. Beschichtungsstoff nach Anspruch 2, dadurch gekennzeichnet, daß als Carbonsäuren Fettsäuren und/oder Öle eingesetzt sind.

4. Beschichtungsstoff nach einem der vorangehenden Ansprüche, dadurch gekennzeichnet, daß als Katalysator Carbonsäuresalze eingesetzt sind.

5. Beschichtungsstoff nach Anspruch 4, dadurch gekennzeichnet, daß die Carbonsäuresalze Salze des Cobalt und/oder Lithium sind.

6. Beschichtungsstoff nach einem der vorangehenden Ansprüche, dadurch gekennzeichnet, daß das Bindemittel durch UV-Strahlung härtbar ist und dafür einen auf UV-Strahlung reagierenden Photoinitiator enthält, der nach Anregung durch UV-Strahlung in mit dem übrigen Bindemittel reagierende reaktive Verbindungen zerfällt.

7. Beschichtungsstoff nach einem der vorangehenden Ansprüche, dadurch gekennzeichnet, daß er den Katalysator in einem Gehalt zwischen 0,01 und 5,0 Gew.-%, vorzugsweise zwischen 0,1 und 1,0 Gew.-%, enthält.

8. Beschichtungsstoff nach einem der vorangehenden Ansprüche, dadurch gekennzeichnet, daß er Feststoffe, insbesondere Füllstoffe und/oder Pigmente, in einem Gehalt bis zu 50 Gew.-% enthält.

9. Beschichtungsstoff nach einem der vorangehenden Ansprüche, dadurch gekennzeichnet, daß er eine flüchtige Komponente, insbesondere Wasser oder Lösemittel, in einem Gehalt bis zu 90 Gew.-% enthalten kann.

10. Beschichtungsstoff nach einem der vorangehenden Ansprüche, dadurch gekennzeichnet, daß er neben dem Katalysator weitere Additive, insbesondere zur Beeinflussung der Verarbeitungs- und/oder Endprodukt-Eigenschaften, in einem Gehalt bis zu 10 Gew.-% enthält.
